# EUROPÄISCHE PATENTANMELDUNG

(11) **EP 4 253 201 A2**
(43) Veröffentlichungstag der Anmeldung: **04.10.2023**
(21) Anmeldenummer: 23187110.4
(22) Anmeldetag: 20.08.2020
(51) Int. Cl.: B62D 33/04

(54) **VERKAUFSANHÄNGER MIT PROFILIERTEN WÄNDEN**

(30) Priorität: 13.09.2019 DE 202019105082 U
(62) Teilanmeldung aus: 20191851.3
(71) Anmelder: Beck, Bernhard, 35794 Mengerskirchen (DE); Beck, Michael, 35794 Mengerskirchen (DE); Beck, Volker, 65549 Limburg/Lahn (DE)
(72) Erfinder: Beck, Bernhard, 35794 Mengerskirchen (DE); Beck, Michael, 35794 Mengerskirchen (DE); Beck, Volker, 65549 Limburg/Lahn (DE)
(74) Vertreter: WSL Patentanwälte Partnerschaft mbB

(57) **Zusammenfassung**

Die vorliegende Erfindung betrifft einen Verkaufsanhänger mit einem Fahrgestell (3), welches mindestens zwei Räder (4) aufweist, und mit einem quaderförmigen Kastenaufbau (2), wobei das Fahrgestell (3) und der Kastenaufbau (2) nicht lösbar miteinander verbunden sind. Um einen Verkaufsanhänger bereitzustellen, der bei einem geringen Gesamtgewicht Wände mit einer hohen Festigkeit und Standhaftigkeit gegenüber Gewalteinwirkungen aufweist, wird erfindungsgemäß vorgeschlagen, dass die zwölf Kanten des quaderförmigen Kastenaufbaus (2) durch vier vertikale (9), vier in Längsrichtung verlaufende (10) und vier in Querrichtung verlaufende Kantenprofile (10') gebildet sind, welche zusammen eine quaderförmige Skelettkonstruktion des Kastenaufbaus (2) bilden, wobei jeweils vier der Kantenprofile (9, 10, 10') je eine von zwei Seitenwänden (16, 16'), je eine von zwei Stirnwänden (17, 17'), den Boden (18) sowie die hierzu gegenüberliegend angeordnete Decke (19) des Kastenaufbaus umrahmen, wobei der Boden Ausnehmungen aufweist, in welche die Räder des Fahrgestells teilweise hineinragen, und wobei zumindest beide Seitenwände (16, 16') und eine Stirnwand (17) mit Ausnahme von Wandöffnungen (23) durch geradlinig verlaufende, im Querschnitt trapezförmige Hochsicken (7) (Obergurte) und Tiefsicken (8) (Untergurte) profiliert sind.

## Beschreibung

Die vorliegende Erfindung betrifft einen Verkaufsanhänger mit einem quaderförmigen Kastenaufbau und mit einem Fahrgestell, welches mindestens zwei Räder aufweist. Das Fahrgestell und der Kastenaufbau sind dabei nicht lösbar miteinander verbunden.

"Nicht lösbar" heißt, dass eine routinemäßige Trennung des Kastenaufbaus von dem Fahrgestell nicht vorgesehen ist und dass Kastenaufbau und Fahrgestell z. B. miteinander verschweißt oder auf andere Weise dauerhaft und fest miteinander verbunden, insbesondere miteinander verschraubt sind.

Solche Verkaufsanhänger werden häufig als mobile Verkaufsstände verwendet, mit denen beispielsweise Nahrungsmittel, Genussmittel, Getränke oder Fanartikel verkauft werden. Insbesondere Verkaufsanhänger, in denen Speisen für den anschließenden Verkauf frisch zubereitetet werden, erfreuen sich wachsender Beliebtheit. Solche Verkaufsanhänger kommen oftmals bei Volksfesten, Musikfestivals oder bei eigens zu diesem Zwecke veranstalteten Street-Food-Festivals zum Einsatz.

Die dabei in Aktion tretenden Verkäufer nutzen ihre Verkaufsanhänger aus wirtschaftlichen Gründen in der Regel bei möglichst vielen Veranstaltungen, die zu unterschiedlichen Terminen und an oftmals weit voneinander entfernt liegenden Orten stattfinden. Aus diesem Grund sind die entsprechenden Verkaufsstände als Anhänger konzipiert, weil sie häufig transportiert werden, um zu den unterschiedlichen Veranstaltungsorten zu gelangen. Entsprechende Anhänger mit Kastenaufbauten können aber auch als fahrbare Büro- oder Wohncontainer ausgestaltet sein.

Aus wirtschaftlichen und umweltschutztechnischen Gründen ist es daher erstrebenswert, dass die Verkaufsanhänger ein geringes Gewicht aufweisen, sodass weniger Ressourcen (Diesel, Geld, Strom, CO₂, etc.) benötigt werden, um den Anhänger zu transportieren.

Gleichzeitig müssen die Verkaufsanhänger aber auch eine ausreichende Stabilität aufweisen, da sie oftmals schwere Einbauten, wie beispielsweise Grillöfen und Kühlschränke, beinhalten. Kommt es beim Transport zu einem unbeabsichtigten Verrutschen eines schweren Gerätes - beispielsweise aufgrund einer Vollbremsung und einer unzureichenden Sicherung - und/oder zu einem Unfall, so sollten die Wände des Verkaufsanhängers dem Aufprall eines schweren Gerätes standhalten, damit es nicht zu einem gefährlichen Herausschleudern des Gerätes kommt.

Eine ausreichende Festigkeit beugt zudem Schäden durch Vandalismus vor. Bei vielen Veranstaltungen, bei denen Verkaufsanhänger zum Einsatz kommen, findet ein übermäßiger Alkoholkonsum statt. Für Verkaufsanhänger besteht daher ein gesteigertes Risiko, dass sie durch unbeabsichtigte Zusammenstöße mit Personen oder durch Schläge, Tritte oder geworfene Gegenstände beschädigt werden.

Die Aufbauten der aus dem Stand der Technik bekannten Verkaufsanhänger weisen oftmals massive Wände und Decken auf, wodurch das Gewicht dieser Verkaufsanhänger naturgemäß höher ist als dies hinsichtlich des gewünschten niedrigen Ressourcenverbrauchs beim Transport erstrebenswert wäre.

Vor diesem Hintergrund ist es Aufgabe der vorliegenden Erfindung, einen Verkaufsanhänger bereitzustellen, der bei einem geringen Gesamtgewicht Wände mit einer hohen Festigkeit und Standhaftigkeit gegenüber Gewalteinwirkungen aufweist.

Diese Aufgabe wird durch einen Verkaufsanhänger der eingangs genannten Art gelöst, nämlich durch einen Verkaufsanhänger mit einem Fahrgestell, welches mindestens zwei Räder aufweist, und mit einem quaderförmigen Kastenaufbau, wobei das Fahrgestell und der Kastenaufbau nicht lösbar miteinander verbunden sind, wobei die zwölf Kanten des quaderförmigen Kastenaufbaus durch vier vertikale, vier in Längsrichtung verlaufende und vier in Querrichtung verlaufende Kantenprofile gebildet werden, welche zusammen eine quaderförmige Skelettkonstruktion des Kastenaufbaus bilden, und wobei jeweils vier der Kantenprofile je eine von zwei Seitenwänden, je eine von zwei Stirnwänden, den Boden sowie die hierzu gegenüberliegend angeordnete Decke des Kastenaufbaus umrahmen, wobei der Boden Ausnehmungen aufweist, in welche die Räder des Fahrgestells teilweise hineinragen. Dabei sind zumindest beide Seitenwände und eine Stirnwand durch geradlinig verlaufende, im Querschnitt trapezförmige Hochsicken (Obergurte) und Tiefsicken (Untergurte) profiliert.

Die Kantenprofile sind im Allgemeinen rechteckige, insbesondere quadratische Hohlprofile mit ebenen Oberflächen. Die Kanten oder Ränder der Seitenflächen und der Stirnfläche können unmittelbar auf Flächen der sie umrahmenden Kantenprofile stumpf aufgeschweißt sein. Alternativ könnten die Oberflächen der Kantenprofile wahlweise auch Nuten aufweisen, in welchen die Ränder oder Kanten der Wände des Kastenaufbaus aufgenommen sind. Der Boden weist Ausnehmungen auf, in welche die Räder des Fahrgestells teilweise hineinragen können.

Durch die profilierten Wandflächen wird mit einem geringen Materialeinsatz eine größtmögliche Festigkeit und Belastbarkeit der beiden Seitenwände und der zumindest einen Stirnwand bewirkt. Die Konstruktion ist insgesamt sehr einfach. Dies ermöglicht eine kostengünstige Leichtbaukonstruktion des Kastenaufbaus, wodurch Gewicht und folglich auch Ressourcen beim Transport wie beispielsweise Benzin, Diesel oder Strom, eingespart werden können.

Der erfindungsgemäße Kastenaufbau ähnelt damit optisch einem Seecontainer, wobei aber Kantenprofile und Wände weniger massiv bzw. mit geringerer Wandstärke hergestellt werden können. Das Gesamtgewicht eines solchen Anhängers mit allen Einbauten sollte bei einer Länge von ca. 6 m (20 Fuß) bevorzugt bei maximal 3,5 t liegen. Zudem weist der erfindungsgemäße Anhänger in der Regel zusätzliche Öffnungen für Fenster, Türen oder Verkaufsklappen und andere An- und Aufbauten auf, die dem jeweiligen Verwendungszweck angepasst sind
Der erfindungsgemäße Verkaufsanhänger kann die Hochsicken und Tiefsicken auch nur an der Außenseite des Kastenaufbaus sichtbar aufweisen, während die Innenseiten der Wände z. B. durch glatte Platten verkleidet sind. Für manche Anwendungen ist es zweckmäßig, wenn die Wände eine Isolierschicht aufweisen, was sich in Verbindung mit einer glatten oder auch gewellten (profilierten) Innenverkleidung leicht realisieren lässt, wobei die Isolierschicht zwischen einer Innenverkleidung und jeweils einer mit Hoch und Tiefsicken gebildeten Außenwand angeordnet ist.

Im Sinne der vorliegenden Erfindung gelten folgende Richtungsdefinitionen: Die Querrichtung verläuft in der Horizontalebene und wird durch den Verlauf der Achse(n) des Fahrgestells festgelegt. Längsrichtung verläuft horizontal und senkrecht zur Querrichtung. Die Vertikalrichtung verläuft senkrecht zur Längsrichtung und senkrecht zur Querrichtung.

Ausführungsformen der vorliegenden Erfindung können aber eine Skelettkonstruktion aufweisen, die in geringem Maße von einer streng quaderförmigen Ausbildung abweicht oder bei der die Kantenprofile nicht streng entlang der oben beschriebenen Raumrichtungen ausgerichtet sind.

In einer Ausführungsform sind die beiden Seitenwände, die beiden Stirnwände, sowie die Decke und der Boden jeweils parallel zueinander angeordnet. In alternativen Ausführungsformen sind leichte Abweichungen von einer strengen Parallelität der Wände bzw. von Decke und Boden und insbesondere auch der Stirnwände vorhanden, um beispielsweise den Luftwiderstand beim Fahren mit dem Anhänger zu reduzieren.

In einer Ausführungsform bestehen die Seitenwände und die zumindest eine Stirnwand zumindest teilweise aus einem Trapezblech, das Hochsicken und Tiefsicken aufweist. Dabei entspricht eine in Bezug auf den Verkaufsanhänger außenseitig angeordnete Hochsicke eines Trapezbleches einer innenseitig angeordneten Tiefsicke bzw. eine innenseitig angeordnete Tiefsicke einer außenseitig angeordneten Hochsicke.

Im Folgenden beziehen sich die Begriffe Hochsicke und Tiefsicke immer auf die Sicht von außen. Die Beschreibung erfolgt demnach aus der Sicht eines außerhalb des Kastenaufbaus stehenden Beobachters.

In einer Ausführungsform erstrecken sich die Hochsicken und Tiefsicken der Seitenwände und die Hochsicken und Tiefsicken der zumindest einen Stirnwand vertikal, sodass in horizontaler Richtung in abwechselnder Reihenfolge Hochsicken und Tiefsicken aufeinander folgen.

Dies erhöht auf vorteilhafte Weise die Tragfähigkeit der Seitenwände und der zumindest einen Stirnwand, sodass Deckenaufbauten, wie z.B. Sonnenschutzmarkisen, Belüftungssysteme oder Kühlsysteme, auf dem Kastenaufbau installiert werden können.

In einer weiteren Ausführungsform ist die Decke analog zu den Seitenwänden profiliert, wobei die Decke aber auch nur Hoch- oder nur Tiefsicken aufweisen kann, die vorzugsweise in Querrichtung verlaufen, sich aber nicht notwendigerweise über den gesamten Abstand zwischen den in Längsrichtung verlaufenden, oberen Kantenprofilen erstrecken .

Durch die Profilierung erlangt auch die Decke eine höhere Belastbarkeit und Stabilität, was zum Beispiel im Falle eines Unfalls beim Transport des Anhängers eine Rolle spielen kann. Zudem erlangt die Decke eine höhere Tragfähigkeit, wodurch schwere Elemente, wie beispielsweise Kühlanlagen oder Klimaanlagen, problemlos direkt auf der Decke angebracht und installiert werden können,

In einer besonders bevorzugten Ausführungsform weisen die Hochsicken und die Tiefsicken jeweils ein gleichschenkliges Trapezprofil auf, wobei die Profilmaße von Hoch- und Tiefsicken vorzugsweise identisch sind.

Entsprechend profilierte Flächen, insbesondere Trapezbleche mit derartigen Hoch- und Tiefsicken, sind einfach und kostengünstig herzustellen, zu lagern und zu transportieren. Somit wird eine kostengünstigere und ressourcenschonendere Herstellung des erfindungsgemäßen Verkaufsanhängers ermöglicht.

In einer weiteren bevorzugten Ausführungsform liegt der zwischen Oberseite und den Schenkeln des Trapezes eingeschlossene Winkel jeweils im Bereich von 100 bis 150 Grad.

In einer weiteren Ausführungsform weisen die Hochsicken der Seitenwände und der zumindest einen Stirnwand die gleiche Breite auf, und die Tiefsicken der Seitenwände und der zumindest einen Stirnwand weisen ebenfalls eine gleiche Breite auf. Mit anderen Worten sind alle Hochsicken gleich breit und alle Tiefsicken gleich breit. Dadurch wird sichergestellt, dass die verwendeten Bauelemente mit Trapezblechen ähnliche mechanische und statische Eigenschaften haben, sodass es hinsichtlich der Belastbarkeit der Seitenwände und der zumindest einen Stirnwand keine nennenswerten Unterschiede gibt. In einer speziellen Ausführungsform ist die Breite der Tiefsicken größer als die Breite der Hochsicken. Vorzugsweise ist die Breite der Tiefsicken um 0,5 cm bis 1 cm größer als die Breite der Hochsicken. Die Herstellung der Trapezbleche wird durch diese für alle Wände identische Profilierung beträchtlich vereinfacht

In einer Ausführungsform betragen die Breiten der Hochsicken und die Breiten der Tiefsicken zwischen 8 cm und 16 cm, vorzugsweise zwischen 9 cm und 14 cm und besonders bevorzugt zwischen 10 cm und 12 cm.

Die Breite einer Hochsicke bzw. die Breite einer Tiefsicke ist hier definiert als die mittlere Breite der jeweiligen Sicke. Im Falle von einander abwechselnden Hoch- und Tiefsicken beginnt und endet definitionsgemäß eine Sicke bei der halben Profiltiefe (hälftigen Profilhöhe). Die Breite ist demnach der Abstand zwischen den zwei Punkten einer Sicke, die bei der halben Profilhöhe bzw. -tiefe liegen.

In einer Ausführungsform weisen die profilierten Flächen eine Profiltiefe von 2 cm bis 6 cm, vorzugsweise von 3 cm bis 4 cm auf.

Es hat sich gezeigt, dass die oben genannten Wertebereiche für den Winkel eines gleichschenkligen Trapezes, die Breiten der Hoch- und Tiefsicken und die Profiltiefe bei gleichzeitig geringem Gewicht optimal an die Größenverhältnisse und Belastbarkeitsanforderungen angepasst sind, wie sie bei Verkaufsanhängern und deren Wänden bzw. Decken zu erwarten bzw. erstrebenswert sind.

In einer Ausführungsform weisen die beiden Seitenwände jeweils zwischen 24 und 28 und die zumindest eine Stirnwand zwischen 8 und 10 Hochsicken auf. Dabei wird eine Hochsicke als eine einzige Hochsicke gezählt, auch wenn sie ihrer Länge nach, d. h. bei einer vertikal ausgerichteten Hochsicke entlang der vertikalen Achse, von einer Öffnung der Seitenwand bzw. der Stirnwand unterbrochen ist.

In einer Ausführungsform weist zumindest eine Seitenwand eine im Wesentlichen rechteckförmige Öffnung auf. Der Kastenaufbau weist zudem eine am oberen Rand der Öffnung um eine horizontale Schwenkachse verschwenkbare Klappe auf, die derart angeordnet und bemessen ist, dass die Klappe in einer offenen Position die Öffnung freigibt und in einer geschlossenen Position die Öffnung verschließt.

Gegenüber der geschlossenen Stellung kann eine Klappe um mindestens 80°, vorzugsweise um bis zu 170° verschwenkt werden, und zwar vorzugsweise um eine entlang der oberen Klappenkante verlaufende Achse nach oben, so dass die dadurch nach außen gewendete Innenseite der Klappe als gut sichtbare Werbefläche dienen kann,
Die Öffnung dient der Ausgabe von Gerichten oder anderen Waren aus dem Anhänger zu den Kunden nach draußen.

In einer Ausführungsform erstrecken sich die Öffnung und die Klappe über mindestens 80 % der Länge einer Seitenwand.

In einer Ausführungsform erstreckt sich die Klappe von dem stirnseitigen Ende eines ersten vertikalen Kantenprofils der Skelettkonstruktion bis zum stirnseitigen Ende eines zweiten vertikalen Kantenprofils der Skelettkonstruktion. Dabei rahmen das erste und das zweite vertikale Kantenprofil die Seitenwand vertikal ein. Die Klappe schließt in einer Variante an beiden gegenüberliegenden Stirnseiten bündig mit den vertikalen Streben ab.

Diese Ausführungsform ermöglicht es auf vorteilhafte Weise, dass die Klappe eine Öffnung in der geschlossenen Position überdecken kann, die sich über die gesamte Länge der betreffenden Seitenwand erstreckt. Durch den bündigen Abschluss von Klappe und den beiden vertikalen Streben an den jeweiligen Stirnseiten der Skelettkonstruktion ergibt sich zudem ein kompakter und optisch sauberer Aufbau des gesamten Kastenaufbaus. Eine derart große Öffnung ermöglicht es wiederum, die gesamte Länge des Kastenaufbaus für den Verkauf über die Öffnung zu verwenden. Wahlweise kann die Klappe auch mit den Innenflächen der angrenzenden vertikalen Kantenprofile bündig abschließen. Der obere Wandabschnitt könnte auch vollständig entfallen, wobei die Schwenkscharniere der Kappe direkt an dem über der Öffnung angeordneten Kantenprofil angebracht sind.

In einer Ausführungsform weist der Verkaufsanhänger eine Absenk- und Hubeinrichtung auf, die derart angeordnet und ausgebildet ist, dass der Kastenaufbau in vertikaler Richtung gegenüber den Radachsen zwischen einer erhöhten Position und einer abgesenkten Position hin- und her bewegt werden kann, wobei die Räder in der abgesenkten Position weiter in die Ausnehmung des Bodens hineinragen als in der erhöhten Position.

Hierzu weist das Fahrgestell zweckmäßigerweise für jedes Paar von Rädern eine Portalachse auf, wobei die Portalachse mit dem Kastenaufbau verbunden sowie mit sich quer von der Achse erstreckenden Auslegern an ihren Enden versehen ist, die an ihren von der Portalachse abgelegenen Enden mit den Radachsen - bzw. den Naben der Räder verbunden sind. Eine hydraulische Hubeinrichtung verändert die Winkelstellung der Ausleger bezüglich der Portalachse, so dass die Radachsen bzw. -naben um die Portalachse verschwenkt werden. Die Portalachse kann hierzu auch drehbar am Fahrgestell gelagert sein. Alternativ sind die Ausleger an der Portalachse drehbar gelagert. Dadurch werden die auf einer Kreisbahn um die Portalachse verschwenkten Räder relativ zum Kastenaufbau abgesenkt oder angehoben, was dementsprechend, wenn die Räder auf dem Boden stehen, ein Heben oder Absenken des Kastenaufbaus bewirkt.

Während des Transports des Verkaufsanhängers mittels des eigenen Fahrgestells wird die erhöhte Position des Kastenaufbaus verwendet, sodass der Kastenaufbau eine ausreichende Bodenfreiheit gegenüber der Straßenoberfläche aufweist. Am Einsatzort kann der Kastenaufbau dann mittels der Absenk- und Hubeinrichtung abgesenkt werden, sodass sich eine vorteilhaftere Höhenlage des Kastenaufbaus für den Verkauf ergibt. Zudem hat der Verkaufsanhänger beim Aufstellen in dem abgesenkten Zustand eine bessere Stabilität.

In einer besonderen Ausführungsform weist der Kastenaufbau zumindest einen, vorzugsweise mehrere vertikale Stützfüße auf, die zwischen einer ausgefahrenen und einer eingefahrenen Position bewegbar sind, wobei der mindestens eine Stützfuß in der ausgefahrenen Position dazu geeignet ist, den Kastenaufbau bodenseitig gegenüber einer Standfläche des Verkaufsanhängers abzustützen.

Die Standfläche, auf welcher der Verkaufsanhänger abgestellt wird kann beispielsweise eine asphaltierte Fläche, eine Wiese oder aber auch das Deck einer Fähre sein. Wenn der Verkaufsanhänger durch die Nutzung seines eigenen Fahrgestells transportiert werden soll, werden die Stützfüße in die eingefahrene Position zurückgezogen, sodass sie den Transport nicht behindern können. Beim Abstellen des Verkaufsanhängers am Zielort wird dieser mittels der oben beschriebenen Absenk- und Hebevorrichtung, falls vorhanden, abgesenkt. Um die Stabilität des Verkaufsanhängers weiter zu erhöhen und auch um den Kastenaufbau mit seinem Boden horizontal auszurichten, wird ein vorzugsweise zumindest nahe jeweils einer der hinteren Ecken des Kastenaufbaus angeordneter Stützfuß anschließend in die ausgefahrene Position bewegt oder gelöst und dabei in Kontakt mit der Standfläche gebracht, auf welcher der Verkaufsanhänger steht, und in der gewünschten Position fixiert. Dadurch werden Schwankungen, wie sie beispielsweise durch das Betreten des Kastenaufbaus durch Personen hervorgerufen werden könnten, wenn er nur oder überwiegend auf den Rädern aufstehen würde, vermieden.

Zweckmäßigerweise schließt in einer Ausführungsform der mindestens eine Stützfuß in der eingefahrenen Position mit der Außenfläche des Bodens (des Kastenaufbaus) mit Ausnahme einer Bodenplatte des Stützfußes bündig ab. Durch den nahezu bündigen Abschluss in der eingefahrenen Position wird die Gefahr eines Hängenbleibens an des Stützfußes an Bodenerhebungen bzw. die Gefahr eines Verfangens in einer Ausnehmung, verhindert.

In einer Ausführungsform weist zumindest eine der beiden Stirnwände eine Flügeltür auf, wobei die Flügeltür zweckmäßigerweise einen ersten und einen zweiten Türflügel aufweist, wobei der erste Türflügel über ein erstes Scharnier zum Beispiel mit einem linkseitigen vertikalen Kantenprofil der Skelettkonstruktion verbunden ist. Der zweite Türflügel ist über ein zweites Scharnier mit einem rechtsseitigen vertikalen Kantenprofil der Skelettkonstruktion verbunden, wobei das linksseitige vertikale Kantenprofil und das rechtsseitige vertikale Kantenprofil die Stirnwand teilweise umrahmen, wobei der erste und der zweite Türflügel von einer geschlossenen Position in eine offene Position um mehr als 90° verschwenkbar sind, so dass die geöffnete Flügeltür vorzugsweise die gesamte Stirnwand zwischen den Kantenprofilen freigibt.

Derartige Flügeltüren an der Stirnwand bzw. eine Stirnwand, die als Flügeltür ausgebildet ist, ermöglichen, gegebenenfalls nach Ausbau der Türflügel, eine stirnseitige Verbindung gleichartiger Kastenaufbauten und auch ein Einbringen von voluminösen Einbauten durch die Türöffnung, Insbesondere wenn die komplette Stirnwand als Flügeltür ausgebildet ist. Da die Flügeltüren dabei jeweils um mehr als 90° verschwenkbar sind, können auch Gegenstände, die im Wesentlichen die gleiche Breite (Abstand zwischen den Seitenwänden) und Höhe (Abstand zwischen Boden und Decke) wie der Innenraum des Kastenaufbaus besitzen, in das Innere des Kastenaufbaus hineingebracht werden. Die hier diskutierte Ausführungsform ermöglicht daher einen einfachen Auf- und Abbau von Interieur-Bestandteilen des Kastenaufbaus.

In einer weiteren Ausführungsform sind die beiden Seitenwände und die zumindest eine Stirnwand zumindest abschnittweise als Trapezblech ausgebildet, wobei das Trapezblech eine Dicke von mindestens 1 mm und nicht mehr als 4 mm, vorzugsweise nicht mehr als 3 mm und besonders bevorzugt nicht mehr als 2,5 mm aufweist. Je geringer die Dicke des verwendeten Trapezbleches, desto geringer ist naturgemäß auch das Gewicht des erfindungsgemäßen Verkaufsanhängers. Insbesondere eine Dicke von 2 bis 2,5 mm stellt dabei einen guten Kompromiss zwischen Gewicht und Belastbarkeit der Trapezbleche dar.

In einer Ausführungsform bestehen die Trapezbleche aus Stahl, insbesondere nicht rostendem Edelstahl, oder Aluminium. Diese Materialien eignen sich auf vorteilhafte Weise für Trapezbleche, die für Wände und Decken von Verkaufsanhängern verwendet werden.

Weitere Vorteile, Merkmale und Anwendungsmöglichkeiten der vorliegenden Erfindung sind ersichtlich anhand der folgenden Figuren und ihrer Beschreibungen. Es zeigen
- Figur 1:: Den Skelettaufbau eines erfindungsgemäßen Anhängers mit Zugstange und Rädern, jedoch ohne den mit der Zugstange fest zu verbindenden Bodenträger des Fahrgestells und ohne den Boden, der Aussparungen für die Räder aufweist,
- Figur 2:: den Skelettaufbau gemäß Figur 1 zusammen mit dem Bodenträger,
- Figur 3:: Den Skelettaufbau mit dem Bodenträger gemäß Figur 2 in einer Draufsicht von oben,
- Figur 4:: eine erste Ausführungsform des erfindungsgemäßen Verkaufsanhängers mit geschlossener Klappe und geschlossener Flügeltür in einer ersten perspektivischen Ansicht von schräg oben,
- Figur 5:: die erste Ausführungsform gemäß Figur 4 in einer zweiten perspektivischen Ansicht von schräg oben,
- Figur 6:: die erste Ausführungsform gemäß Figur 4 mit geöffneter Klappe und geöffneter Flügeltür in der ersten perspektivischen Ansicht,
- Figur 7:: eine zweite Ausführungsform des erfindungsgemäßen Verkaufsanhängers in einer Ansicht von oben, wobei die Decke ausgeblendet ist,
- Figur 8:: eine Seitenansicht der in Figur 7 gezeigten zweiten Ausführungsform, wobei sich der Kastenaufbau in der erhöhten Position befindet,
- Figur 9:: die Seitenansicht aus Figur 8, wobei sich der Kastenaufbau in der abgesenkten Position befindet,
- Figur 10 :: eine Schnittansicht des Verkaufsanhängers mit einer Schnittebene senkrecht zur Längsrichtung, wobei sich der Kastenaufbau in der erhöhten Position befindet,
- Figur 11:: eine Schnittansicht entsprechend Figur 10, wobei sich der Kastenaufbau in der abgesenkten Position befindet,
- Figur 12:: eine dritte Ausführungsform des erfindungsgemäßen Verkaufsanhängers mit geschlossenen Klappen und eingeklappter Stehtischplatte in einer ersten perspektivischen Ansicht (Frontansicht),
- Figur 13:: die dritte Ausführungsform in einer zweiten perspektivischen Ansicht (Rückansicht),
- Figur 14:: die dritte Ausführungsform mit geöffneten Klappen und einer ausgeklappten Stehtischplatte in der Frontansicht gemäß Figur 12,
- Figur 15:: die dritte Ausführungsform mit geöffneten Klappen und einer ausgeklappten Stehtischplatte in der Rückansicht gemäß Figur 13,
- Figur 16:: eine Profildarstellung eines Ausschnittes eines Trapezbleches eines erfindungsgemäßen Verkaufsanhängers.

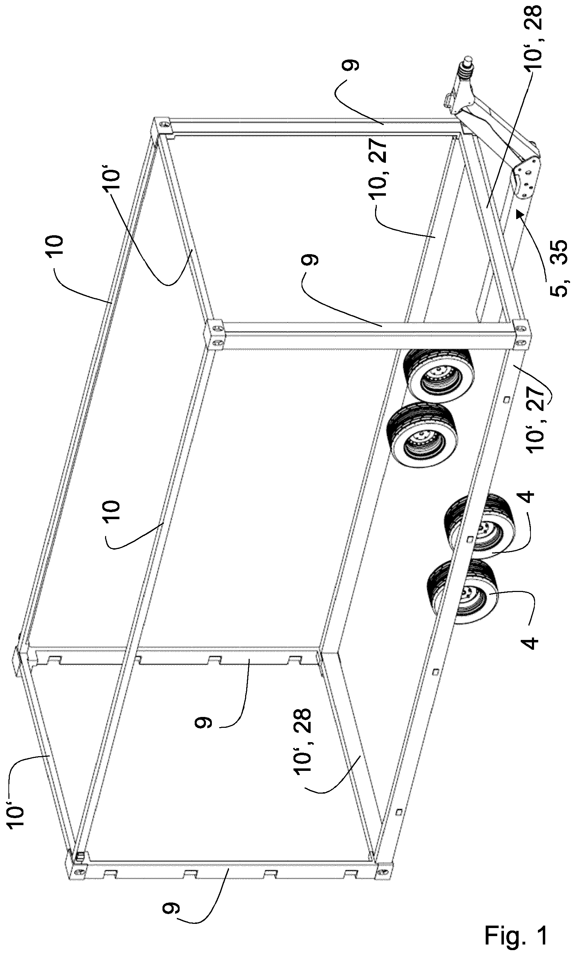

In der perspektivischen Ansicht gemäß Figur 1 ist die Skelettkonstruktion des Kastenaufbaus 2 des Verkaufsanhängers erkennbar. Die Skelettkonstruktion setzt sich dabei aus den vertikalen Kantenprofilen 9 und den horizontal gelagerten Kantenprofilen 10 und 10' (in Längsrichtung verlaufendes Kantenprofil 10 und in Querrichtung verlaufendes Kantenprofil 10') zusammen. An den Eckpunkten des Kastenaufbaus 2 sind jeweils ein in Querrichtung verlaufendes Kantenprofil 10', ein in Längsrichtung verlaufendes Kantenprofil 10 sowie ein vertikal verlaufenden Kantenprofil 9 miteinander verbunden.

Zudem sind die vier Räder 4 des Verkaufsanhängers sichtbar, wobei jeweils auf einer Längsseite des Verkaufsanhängers zwei Räder 4 angeordnet sind. Außerdem ist die Zugwagenkupplung 5, die eine Schwanenhalszugstange 25 aufweist, gezeigt. Die Radachsen und die Radaufhängung sind in der hier gezeigten Darstellung ausgeblendet.

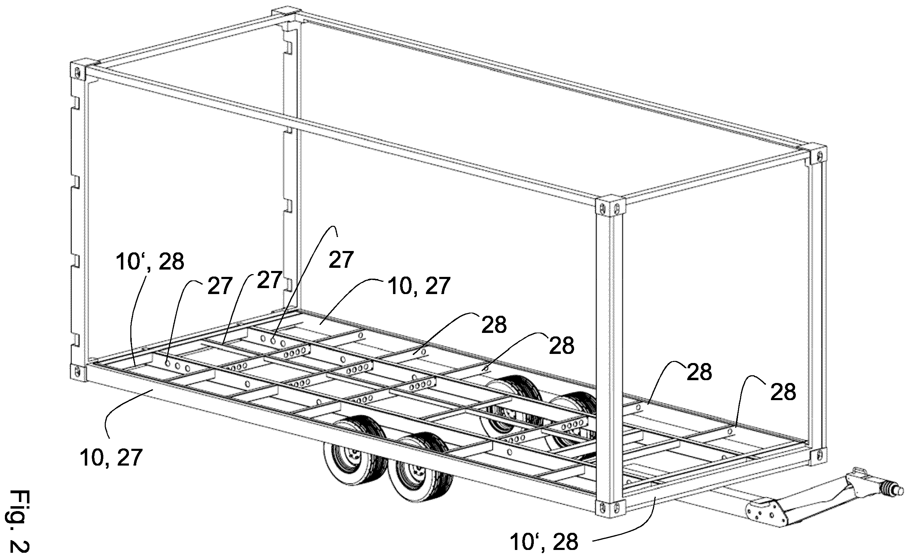

Figur 2 zeigt die Skelettkonstruktion aus Figur 1, wobei die Elemente des Bodenträgers zusätzlich eingeblendet sind. Der gezeigte Bodenträger besteht aus Längsträgern 27, Querträgern 28 und umfasst in diesem Sinne auch die unteren Längskantenprofile 10 als Längsträger 27 und die unteren Querkantenprofile 10' als Querträger 28.

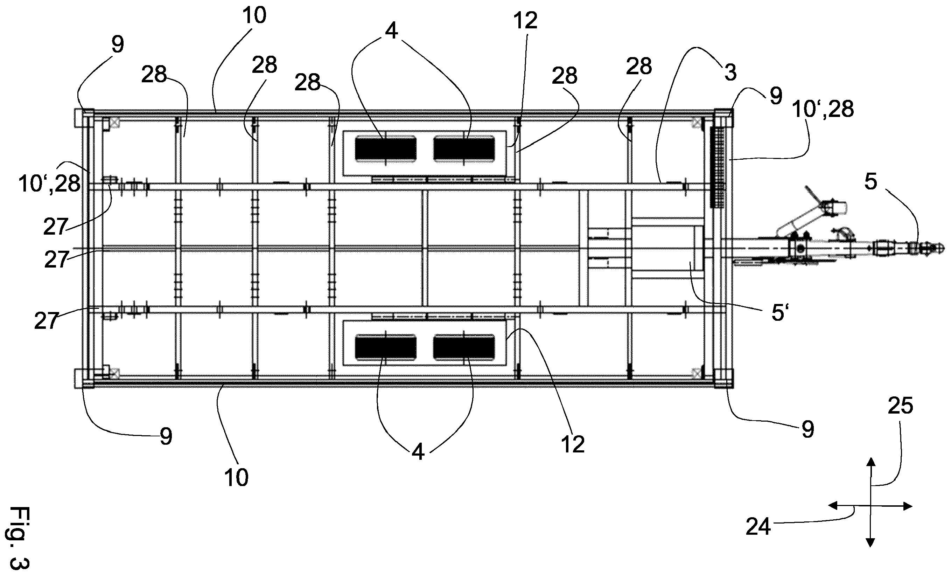

Figur 3 zeigt den Bodenträger des Verkaufsanhängers in einer Draufsicht von oben. Erkennbar sind die bereits in Figur 2 gezeigten Längsträger 27 und Querträger 28 sowie die vier Räder 4, wobei jeweils zwei Räder 4 in Längsrichtung 24 hintereinander innerhalb eines Radkastens 12 angeordnet sind. Die Räder eines jeweiligen Radpaares weisen dabei einen geringen Abstand zueinander auf, der bei speziellen Ausführungsformen aber veränderbar ist. Die Radachsen (nicht eingezeichnet) verlaufen in Querrichtung 25. Diese Darstellung zeigt zudem die feste (integrale) Verbindung von Zugwagenkupplung 5 und Bodenträger 27, 28 mittels eines Verbindungelements 5'.

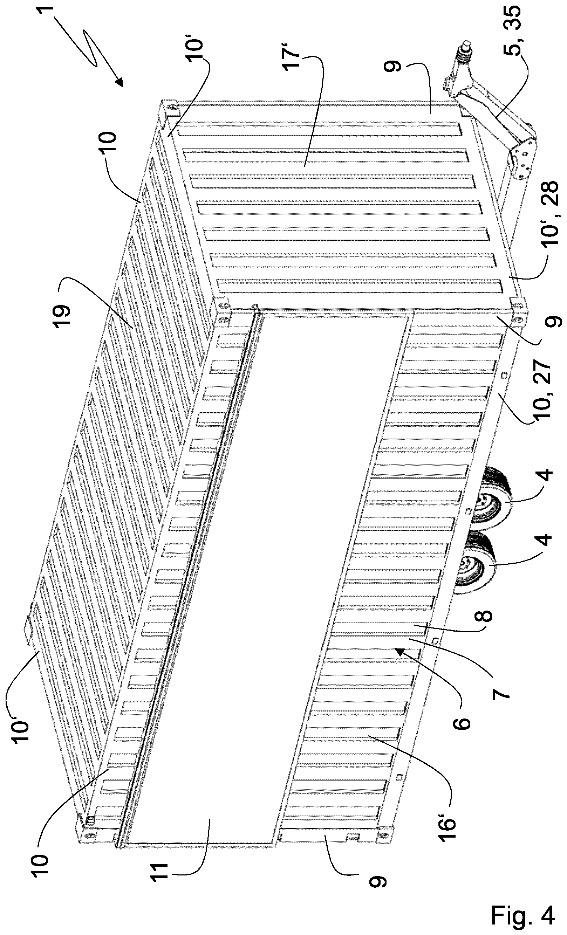

Figur 4 zeigt eine perspektivische Ansicht einer ersten Ausführungsform 1 des erfindungsgemäßen Verkaufsanhängers. Im Vergleich zu den Figuren 1 bis 3 sind hierbei keine Elemente ausgeblendet. Zu erkennen sind daher vor allem die Außenseiten der Seitenwand 16', der Stirnwand 17' und der Decke 19. Diese Wand- und Deckenelemente werden von den Kantenprofilen 9, 10 und 10' des in den Figuren 1 bis 3 gezeigten Skelettaufbaus umrahmt.

Bei der in Figur 4 gezeigten Ausführungsform 1 sind die beiden Seitenwände 16 (nicht sichtbar) und 16', die Stirnwand 17' sowie die Decke 19 als Trapezbleche 6 ausgebildet. Diese Trapezbleche 6 weisen Hocksicken 7 und Tiefsicken 8 auf. Bei der hier gezeigten Ausführungsform 1 verlaufen die Hoch- und Tiefsicken der Decke 19 in Querrichtung 25 und die Hoch- und Tiefsicken der Seitenwände in vertikale Richtung 26, und zwar derart, dass eine Hochsicke 7 bzw. Tiefsicke 8 der Decke 19 an der gleichen Längsposition verläuft wie eine Hochsicke 7 bzw. Tiefsicke 8 der Seitenwand. Somit scheint es, als würden sich sie Hoch- und Tiefsicken der Decke 19 über die oberen Kantenprofile 10 in die Seitenwände 16 und 16' fortsetzen.

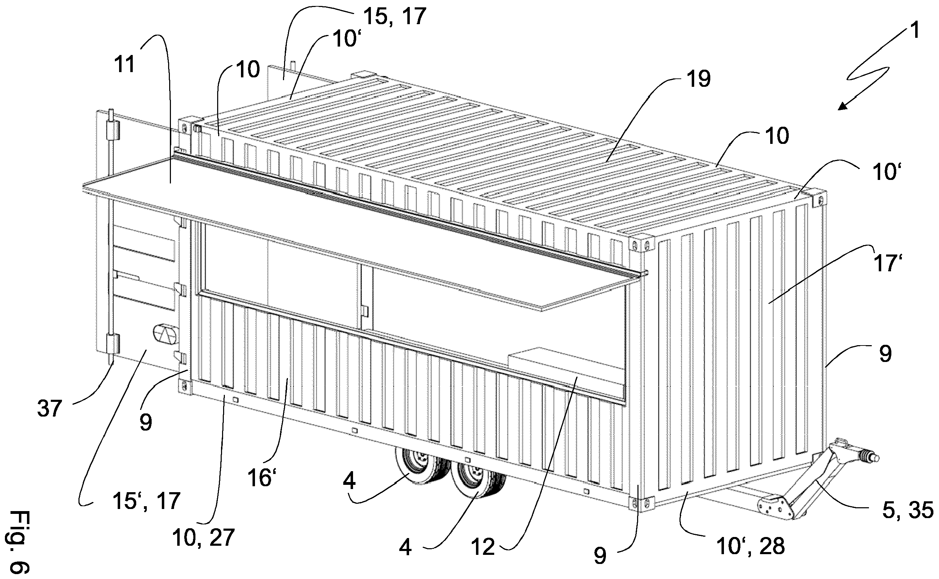

Die in Figur 4 gezeigte Ausführungsform 1 weist an der Seitenwand 16' eine sich über die komplette Länge (in Längsrichtung 24) der Seitenwand erstreckende Klappe 11 auf. Diese befindet sich bei der hier gezeigten Ansicht in einer geschlossenen Position und verdeckt dadurch die Wandöffnung 23 der Seitenwand 16', welche in Figur 6 ersichtlich ist. Die Klappe 11 schließt in dieser Position auf beiden Stirnseiten bündig mit den stirnseitigen Außenflächen der sie umrahmenden vertikalen Kantenprofile 9 ab.

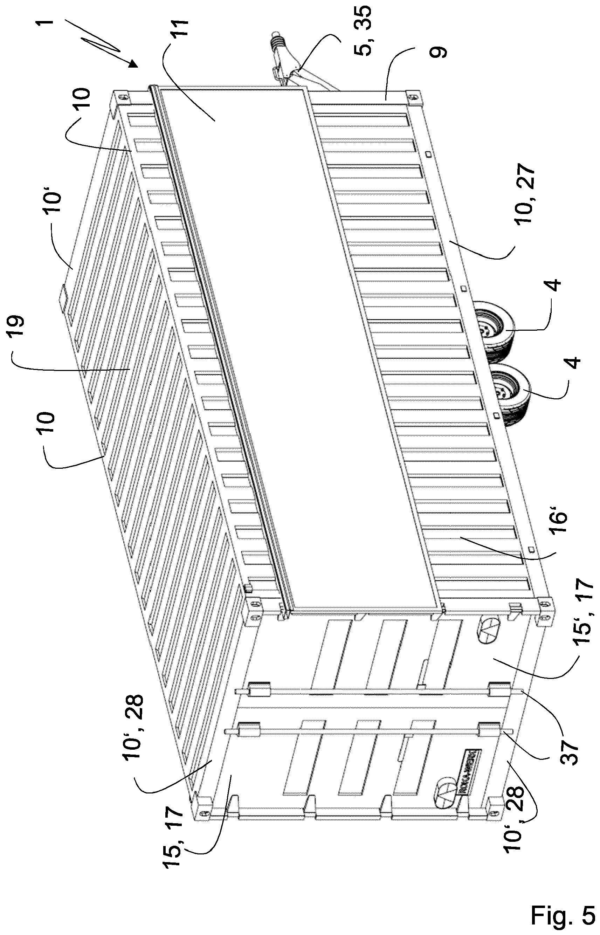

In Figur 5 ist die erste Ausführungsform 1 in einer zweiten perspektivischen Ansicht dargestellt. Der Betrachter schaut nun auf die Seitenwand 16', die Decke 19 und die - im Vergleich zur Ansicht in Figur 4 - gegenüberliegende Stirnwand 17 des Verkaufsanhängers. Die Stirnwand 17 setzt sich aus einer Flügeltür mit zwei Türflügeln 15 und 15' zusammen. In der hier gezeigten Ansicht ist die Flügeltür 17 in einem geschlossenen Zustand. Jeder Türflügel 15 und 15' der Flügeltür 17 verfügt über eine Verriegelungsstange 37, mit welcher der jeweilige Türflügel 15 oder 15' verriegelt werden kann.

Figur 6 zeigt die erste Ausführungsform 1 des Verkaufsanhängers in einer perspektivischen Ansicht, die der Ansicht aus Figur 4 entspricht. im Vergleich zu Figur 4 befinden sich hierbei aber die Klappe 11 und die Flügeltür 17 in einer geöffneten Position. Die Klappe 11 ist um ca. 90 Grad nach oben verschwenkt und bildet somit ein Schutzdach für den Verkaufsbereich des Verkaufsanhängers, sodass Kunden, die über die nun freigelegte Öffnung 23 Waren aus dem Verkaufsanhänger erwerben möchten, durch die Klappe 11 z.B. vor Sonne und Regen geschützt werden. Die freigelegte Öffnung 23 gibt zudem Einsicht in das Innere des Verkaufsanhängers, unter anderem auf den (geschlossenen) Radkasten 12, der zur Aufnahme der Räder 4, die von dem Anhänger in dieser Perspektive verdeckt werden, dient. Auch die Türflügel 15 und 15' sind in der in Figur 6 gezeigten Darstellung in einer offenen, um ca. 90 Grad zu den Außenseiten verschwenkten Position gezeigt.

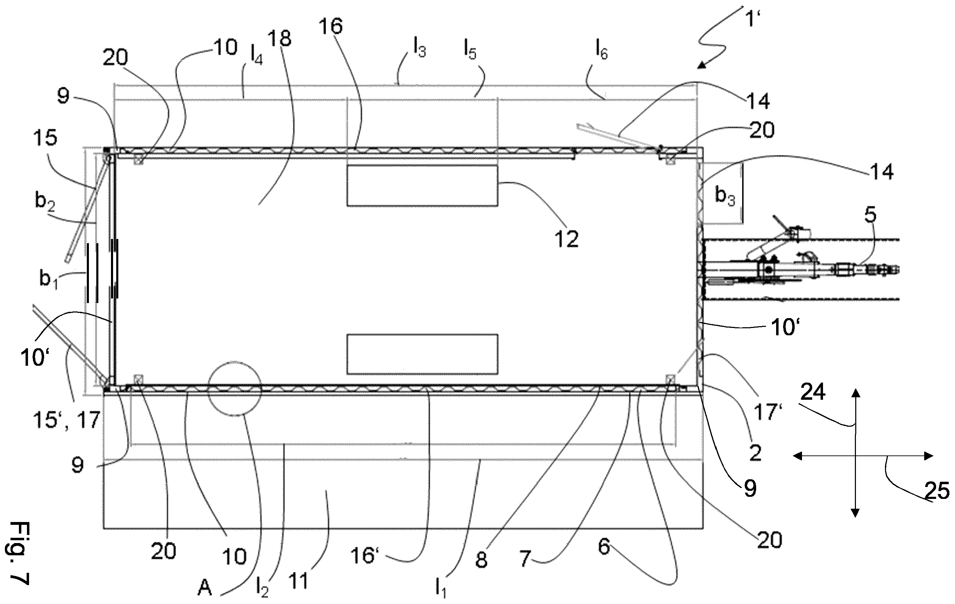

In Figur 7 ist eine zweite Ausführungsform 1' des Verkaufsanhängers in einem horizontalen Schnitt nahe der Decke gezeigt, sodass das Innere des Kastenaufbaus 2 sichtbar ist. Klar erkennbar ist der rechteckige Querschnitt des Kastenaufbaus 2 in der horizontalen Ebene. Der Kastenaufbau 2 wird dabei in der Horizontalen durch die beiden gegenüberliegenden Seitenwände 16 und 16' sowie die senkrecht dazu angebrachten Stirnwände 17 und 17' begrenzt. Die Seitenwände 16 und 16' verlaufen entlang der Längsrichtung 24 und die Stirnwände verlaufen in Querrichtung 25.

Die linkseitig dargestellte, rückwärtige Stirnwand 17 ist auch bei der in Figur 7 gezeigten Ausführungsform 1' als Flügeltür mit Türflügeln 15 und 15' ausgebildet. Die Türflügel 15 und 15' lassen sich - wie bei der ersten Ausführungsform 1 in Figur 6 gezeigt - nach außen verschwenken. Sie befinden sich in der hier gezeigten Darstellung in einen offenen Zustand, wobei sie jeweils nur um einen kleinen Winkel verschwenkt sind. Es ist aber möglich, die Türflügel 15 und 15' um mindestens 180 Grad nach außen zu verschwenken.

Auch bei der hier gezeigten Ausführungsform 1' weist die Seitenwand 16' eine Klappe 11 auf, die sich in Längsrichtung 24 über die gesamte Länge der Seitenwand 16' erstreckt. Die Klappe 11 der Seitenwand 16' ist hier in einer offenen Position gezeigt, bei der sie nach oben verschwenkt ist (entsprechend der Darstellung in Figur 6). In der Figur 7 betrachtet man daher die Außenfläche der Klappe 11 von oben.

Ferner ist anhand von Figur 7 ersichtlich, dass die beiden Seitenwände 16 und 16' bis auf die Öffnung 23 der Seitenwand 16' als Trapezbleche ausgebildet sind. Diese Trapezbleche weisen Hochsicken 7 und Tiefsicken 8 auf. Auch die Stirnwand 17' ist als Trapezblech ausgebildet, welches Hochsicken 7 und Tiefsicken 8 entsprechend den Seitenwänden 16 und 16' aufweist.

Zu erkennen ist in Figur 7 auch die Zugwagenkupplung 5, die sich in Längsrichtung 24 an die Stirnwand 17' des Verkaufsanhängers 1 anschließt und mit dem Boden des Kastenaufbaus 2 genauer gesagt mit dem Bodenträger des Fahrgestells 3 fest verbunden ist. Am Fahrgestell 3 sind wiederum zwei Portalachsen 33 angebracht, die über Ausleger 34 mit den Naben je eines Paares von Rädern 4 verbunden sind, Die Radachsen sind somit gegenüber den Portalachsen 33 um die Auslegerlänge versetzt am Fahrgestell 3 angeordnet. Die Ausleger 34 sind durch einen oder mehrere Hydraulikzylinder untereinander oder mit dem Fahrgestell 3 verbunden und können somit bei Betätigung die Winkelposition der Ausleger 34 und somit - vorzugsweise synchron - die Höhenposition der Radnaben gegenüber dem Fahrgestell 3 verändern. Je nach entsprechender Position sind dann die Räder 4 mehr oder weniger tief in den Ausnehmungen 12 am Boden des Kastenaufbaus 2 aufgenommen und der Kastenaufbau 2 ist in einer mehr oder weniger abgesenkten Stellung angeordnet.

Die Zugwagenkupplung 5 weist eine Hydraulikeinheit 13 für die Hebe- und Absenkeinrichtung auf. Sie hat außerdem einen sogenannten Schwanenhals, so dass in eine teilweise aufgerichtete und axial verkürzte Position gebracht werden kann. In dieser Position kann die Zugwagenkupplung 5 als Tischstütze für einen Klapptisch (klappbare Stehtischplatte) 22 an der vorderen Stirnseite dienen.

Zudem verfügt die Seitenwand 16, welche der die Klappe 11 aufweisenden Seitenwand 16' gegenüberliegend angeordnet ist, über eine Tür 14. Auch an der vorderen Stirnwand 17 ist eine Tür oder Stauklappe 14 vorgesehen, die Zugang zu einer separaten Kammer gewährt, die zum Beispiel für die Aufnahme von Gasflaschen, Werkzeug oder anderen Gegenständen verwendet werden kann. Die großen Türflügel 15, 15' der rückwärtigen Stirnwand 17 können dann ganz oder teilweise entfallen und durch eine weitere profilierte Wand mit oder ohne Wandöffnung ersetzt werden.

Die in Figur 7 gezeigte Ausführungsform 1' weist zudem an seinem Boden 18 zwei Radkästen 12 auf, die als Aufnahme für die Räder 4 des Fahrgestells 3 ausgebildet sind.

Der hier gezeigte Kastenaufbau 2 weist eine Gesamtlänge l₁ (gemessen in Längsrichtung 24), eine Gesamtbreite b₁ (gemessen in Querrichtung 25) und eine Gesamthöhe h₁ (gemessen in vertikaler Richtung 26) auf. Der Innenraum des Kastenaufbaus weist eine entsprechend zu messende Innenraumlänge l₃, eine Innenraumbreite b₂ und eine Innenraumhöhe h₉ auf.

In der Figur 7 werden ebenfalls die Länge l₂ des Trapezbleches der Seitenwand 16', die Länge l₅ der Radkästen 12 sowie die Abstände l₄ und l₆ der Radkästen von den Stirnwänden 17 bzw. 17' gezeigt.

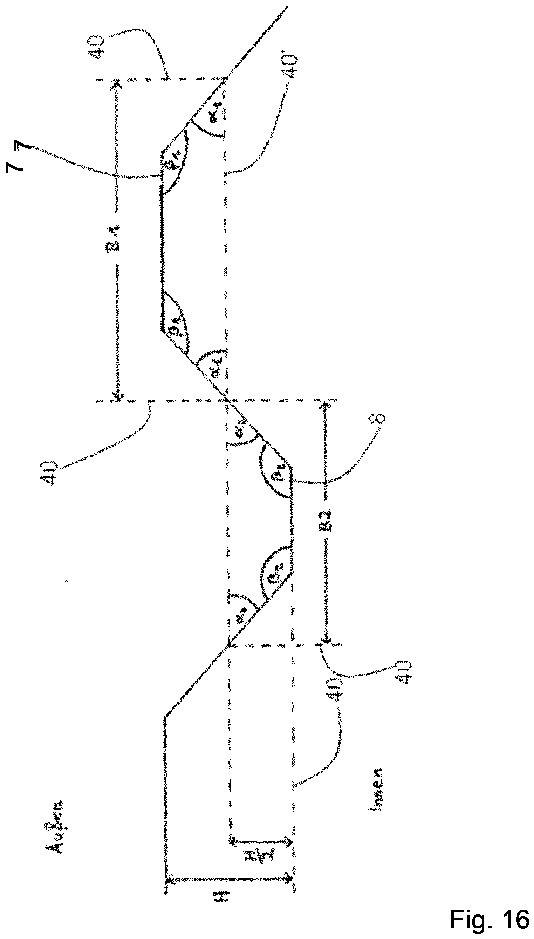

Der gekennzeichnete Bereich A ist in Figur 16 vergrößert dargestellt. Dort wird das Profil des Trapezbleches, d. h. das Profil der Hochsicken 7 und Tiefsicken 8, im Detail und vergrößert dargestellt.

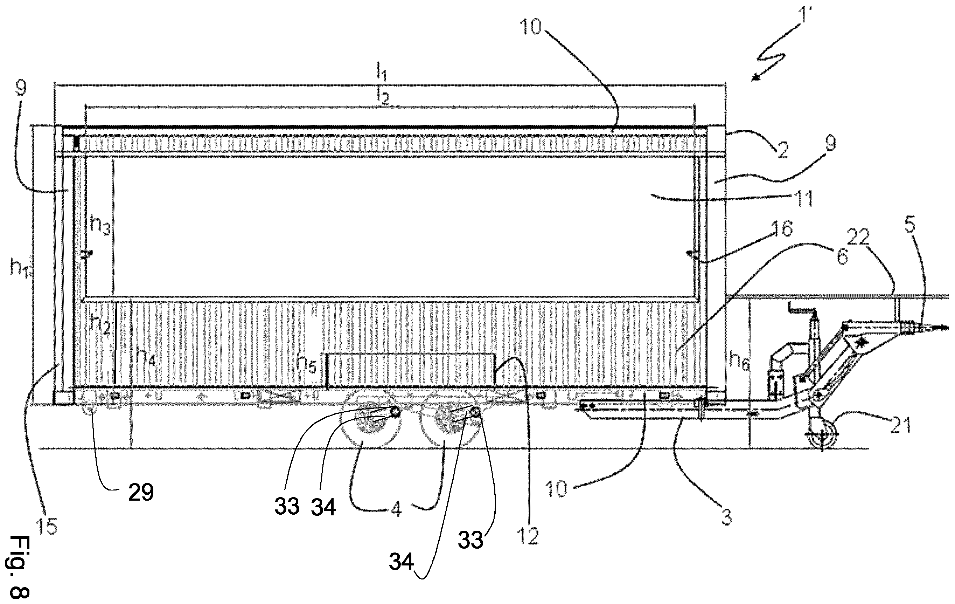

Die Seitenansicht in Figur 8 lässt die Öffnung 23 der Seitenwand 16' erkennen. Die Klappe 11 ist auch hier in der offenen, verschwenkten Position, sodass in dieser Seitenansicht nur die Vorderkante der Klappe 11 erkennbar ist. Die Öffnung 23 weist eine Höhe h₃ auf, die in der hier gezeigten Ausführungsform ca. 1,3 m beträgt.

Ebenfalls gut zu erkennen sind die Räder 4 des Fahrgestells 3. An der Zugwagenkupplung 5 ist ein Stützrad 21 zu erkennen. Mithilfe der Höhenverstellung dieses Stützrades 21 lässt sich der Verkaufsanhänger 1 bequem an einen Zugwagen ankoppeln und von einem Zugwagen abkoppeln.

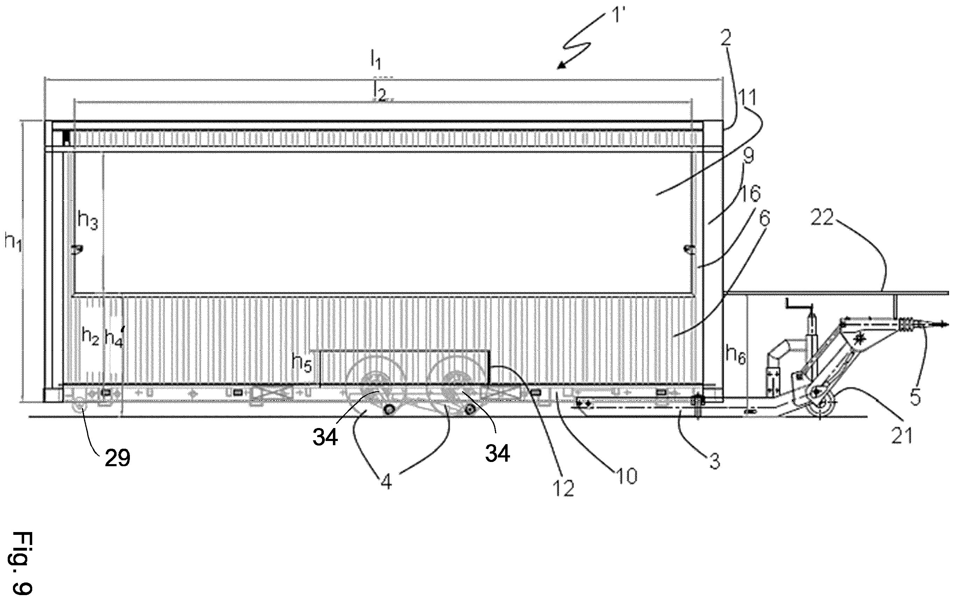

In Figur 8 ist der Kastenaufbau in der erhöhten Position gezeigt. Hingegen ist in Figur 9 die abgesenkte Position dargestellt. In der erhöhten Position weist die Unterkante der Öffnung 23 eine Höhe h₄ von ca. 1,4 m über der Standfläche auf. In der abgesenkten Position weist die Unterkante der Öffnung 23 eine Höhe h₄' von ca. 1 m über der Standfläche auf.

Der Abstand zwischen der Unterkante des Kastenaufbaus 2 und der Unterkante der Öffnung 23 wird mit h₂ bezeichnet und beträgt ca. 1 m. Die Höhe des Radkastens h₅ beträgt ca. 0,3 m. In den Figuren 8 und 9 ist zudem die Stehtischplatte 22 dargestellt, die oberhalb der Zugwagenkupplung 5 angeordnet wird, wenn sich der Verkaufsanhänger - wie hier dargestellt - im Einsatz als Verkaufsstand befindet. In der erhöhten Position weist der daraus resultierende Stehtisch eine Höhe h₆ von ca. 1,4 m und in der abgesenkten Position eine Höhe h₆' von ca. 1,1 m auf.

Die Figuren 8 und 9 zeigen auch eine Sicherheitsrolle 29. Wird mit dem Anhänger z. B. eine unebene Straße befahren oder muss eine Hügelkuppe überfahren werden, so verhindert die Sicherheitsrolle 29, dass die Unterseite des Kastenaufbaus 2 im Bereich der Sicherheitsrolle 29 auf dem befahrenen Untergrund aufsetzt. Bevorzugt sind mehrere Sicherheitsrollen 29 vorgesehen. Insbesondere können vier Sicherheitsrollen 29 jeweils in den Ecken eines gedachten Rechtecks unterhalb des Bodens des Kastenaufbaus angeordnet werden. Die Sicherheitsrolle bzw. Sicherheitsrollen weisen dabei bevorzugt einen lichten Abstand von weniger als 1 m vom jeweils nächstgelegenen vertikalen Kantenprofil 9 und vorzugsweise von weniger als 50 cm zu einer der Seitenwände 16 bzw. 16' auf.

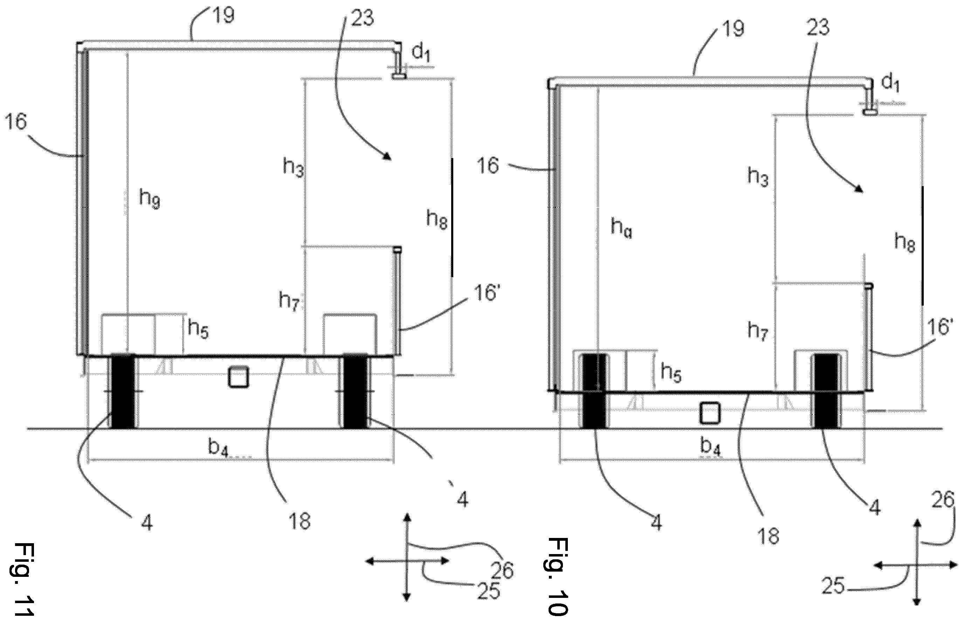

In den Figuren 10 und 11 wird der Verkaufsanhänger in einer vertikalen Schnittebene dargestellt. Die Figur 10 zeigt dabei den Kastenaufbau 2 in der erhöhten Position und die Figur 11 zeigt den Kastenaufbau 2 in der abgesenkten Position. In dieser Darstellung wird erkennbar, dass die Klappe 11 gegenüber den Trapezblechen 6 der Seitenwand 16' sowohl in der verschwenkten Position als auch in der die Öffnung 23 verschließenden Position nach außen vorstehend angeordnet werden kann. Der Abstand der Außenfläche der Klappe 11 in der geschlossenen Position zur Außenfläche der Seitenwand 16' wird mit d₁ bezeichnet. Ebenfalls in dieser Darstellung erkennbar ist h₇ der Abstand der Unterkante der Öffnung 23 zum Boden 18.

Die oben angegebenen Maße für die in den Figuren 7 bis 11 dargestellten Verkaufsanhänger sind - soweit es sich um identische oder ähnliche Element handelt - für alle Ausführungsformen es erfindungsgemäßen Verkaufsanhängers gemäß der hier diskutierten Figuren verwendbar.

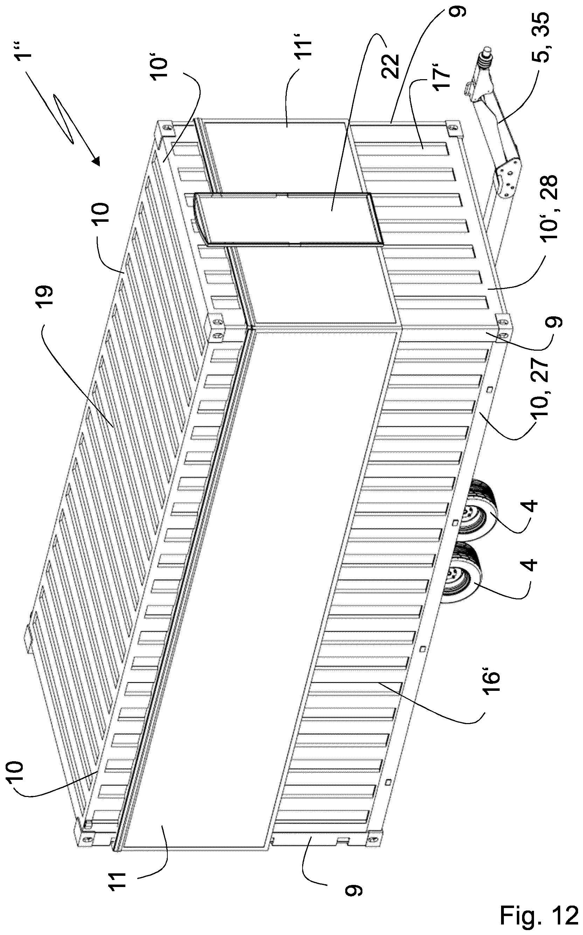

In Figur 12 ist eine dritte Ausführungsform 1" des erfindungsgemäßen Verkaufsanhängers gezeigt. Diese besitzt dem Grunde nach den gleichen Aufbau wie die in den Figuren 4 bis 6 gezeigte erste Ausführungsform 1, verfügt aber über eine zusätzliche stirnseitige Klappe 11' und einen ausklappbaren Stehtisch 22 sowie über eine Tür 14. Der Stehtisch 22 und die Tür 14, die in der nichtsichtbaren Seitenwand 16 angeordnet ist, sind bereits aus der zweiten Ausführungsform 1' bekannt.

Die stirnseitige Klappe 11' erstreckt sich über die komplette Länge (in Querrichtung) der Stirnwand 17'. Figur 12 zeigt die Klappen 11 und 11' sowie den ausklappbaren Stehtisch 22 in geschlossenen bzw. eingeklappten Positionen. In dieser Form wird der Anhänger bevorzugt transportiert.

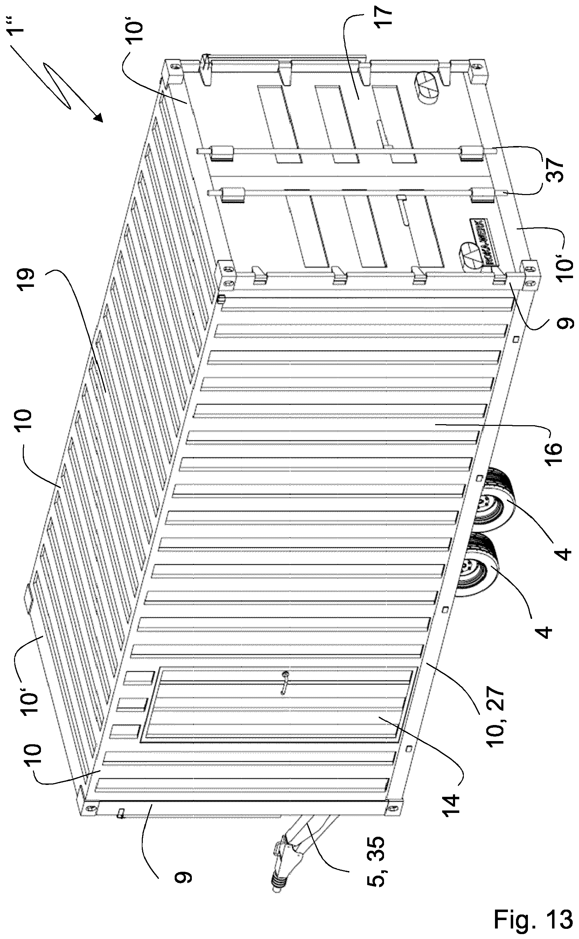

Figur 13 zeigt die Ausführungsform 1" aus Figur 12 in einer zweiten perspektivischen Ansicht, wobei in dieser Ansicht für den Betrachter die Seitenwand 16, die Stirnwand 17 und die Decke 19 ersichtlich sind. Bezogen auf den Verwendungszweck als Verkaufsstand, schaut der Betrachter in der Figur 12 auf die Frontseite des Verkaufsanhängers, welche in der Regel den Kunden zugewandt ist, und in der Figur 13 auf die Rückseite des Verkaufsanhängers. In der Rückseitenansicht in Figur 13 sind insbesondere die Tür 14 und die als Flügeltür ausgebildete Stirnwand 17 gut zu erkennen. Über die Tür 14 kann das Personal des Verkaufsanhängers unkompliziert in das Innere des Anhängers gelangen, ohne dass die große stirnseitige Flügeltür 17 geöffnet werden muss.

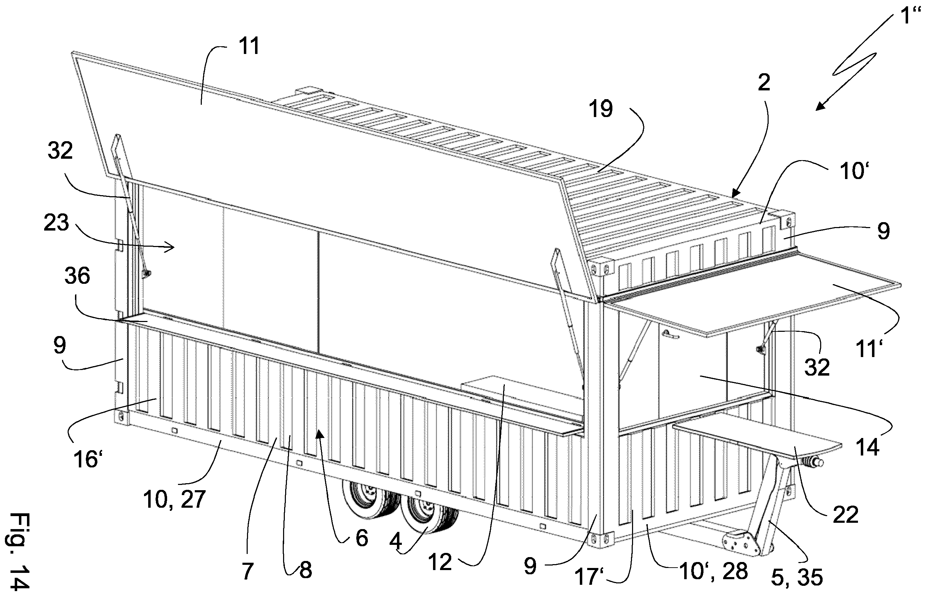

Figur 14 zeigt einen Zustand der Ausführungsform 1" des Anhängers mit einer vollständig nach oben verschwenkten Klappe 11, in der sich die Klappe fast parallel zu der Seitenwand 16' nach oben erstreckt. Wenn die Klappe 11 nicht als Wetterschutz benötigt wird, gewinnt man so eine große und weithin sichtbare Werbefläche. Die stirnseitige Klappe 11' befindet sich hier in einer um ca. 90 Grad verschwenkten Position. Bei Bedarf kann aber auch die stirnseitige Klappe 11' vollständig nach oben verschwenkt werden. Bei der hier gezeigten Ausführungsform werden die Klappen 11 und 11' über Hydraulikzylinder 32 verschwenkt.

In dem in Figur 14 gezeigten Zustand des Anhängers befindet sich die Schwanenhalszugstange 35 der Zugwagenkupplung 5 in einer derart angewinkelten Position, dass die Stehtischplatte 22 , welche in der Figur 13 noch in einer eingeklappten Position gezeigt ist, in einer ausgeklappten Position auf einer Auflagefläche der Zugwagenkupplung 5 aufliegt und dadurch eine waagerechte Tischplatte bereitstellt. Zudem ist in der Figur 14 eine zusätzliche Thekenklappe 36 in einer ausgeklappten Position erkennbar. Die Thekenklappe 36 erstreckt sich über die gesamte Länge der Öffnung 23 (an der unteren Kante der Öffnung 23) und stellt in der gezeigten, nach außen ausgeklappten Position eine schmale Theke zu Verfügung, auf der z.B. Speisen und Getränke für Kunden bereitgestellt werden können.

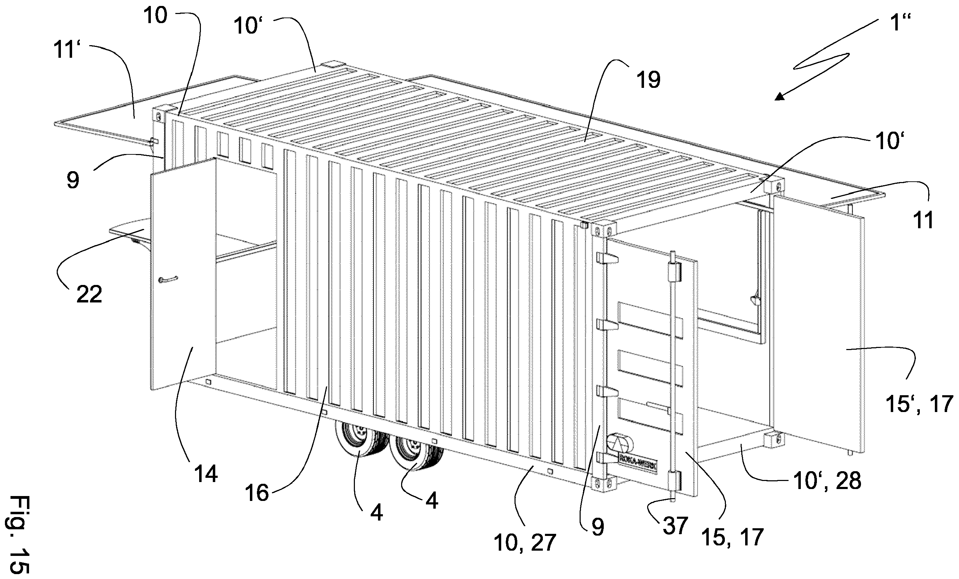

In Figur 15 ist die dritte Ausführungsform 1" nochmals in der aus der Figur 13 bekannten Rückansicht gezeigt, wobei nun die Tür 14 und die Flügeltür 17 in einer offenen Position gezeigt sind.

Wenn in der Seitenwand 16 eine Tür 14 vorgesehen ist - wie in den Ausführungsformen der Fig. 13 bis 15 - kann man die rückwärtige Flügeltür 17 durch eine Stirnwand mit Trapezblechen ersetzen, wie sei z.B. in den Fig. 4, 12 und 14 dargestellt ist

In Figur 16 wird die trapezförmige Profilierung bzw. das trapezförmige Profil eines Trapezbleches, welches erfindungsgemäß zumindest abschnittweise eine Seitenwand 16, 16' bzw. eine Stirnwand 17, 17' des Verkaufsanhängers bildet, gezeigt. Definitionsgemäß handelt es sich bei der nach außen ragenden Erhöhung des Trapezbleches um eine Hochsicke 7 und bei der nach innen ragenden Erhöhung, die von außen betrachtet eine Vertiefung darstellt, um eine Tiefsicke 8. Im hier gezeigten Beispiel weist die Hochsicke 7 eine Breite B1 und die Tiefsicke 8 eine Breite B2 auf. Die Breiten B1 und B2 ergeben sich wie in der Figur 7 anhand der Hilfslinie bei halber Profilhöhe H/2 gezeigt ist aus dem Abstand zwischen den zwei Punkten einer Sicke bei halber Profilhöhe.

Die Figur 16 zeigt ein Trapezblech mit einem gleichschenkligen Trapezprofil. Das dem Profil zugrunde liegende Trapez, welches sich durch das Einzeichnen der Hilfslinie 40' bei halber Profilhöhe H/2 ergibt, besitzt einen Winkel α zwischen der längeren Unterseite des Trapezes und dem jeweiligen Schenkel des Trapezes und einen Winkel β zwischen der kürzeren Oberseite des Trapezes und dem jeweiligen Schenkel des Trapezes. Bei der in Figur 16 gezeigten Ausführungsform eines Trapezbleches weist die Hochsicke entsprechend einen Winkel α₁ von ca. 35 Grad und einen Winkel β₁ von dementsprechend ca. 145 Grad auf. Die abgebildete Tiefsicke weist in diesem Fall ebenfalls einen Winkel α₂ von ca. 35 Grad und einen Winkel β₂ von ca. 145 Grad auf.

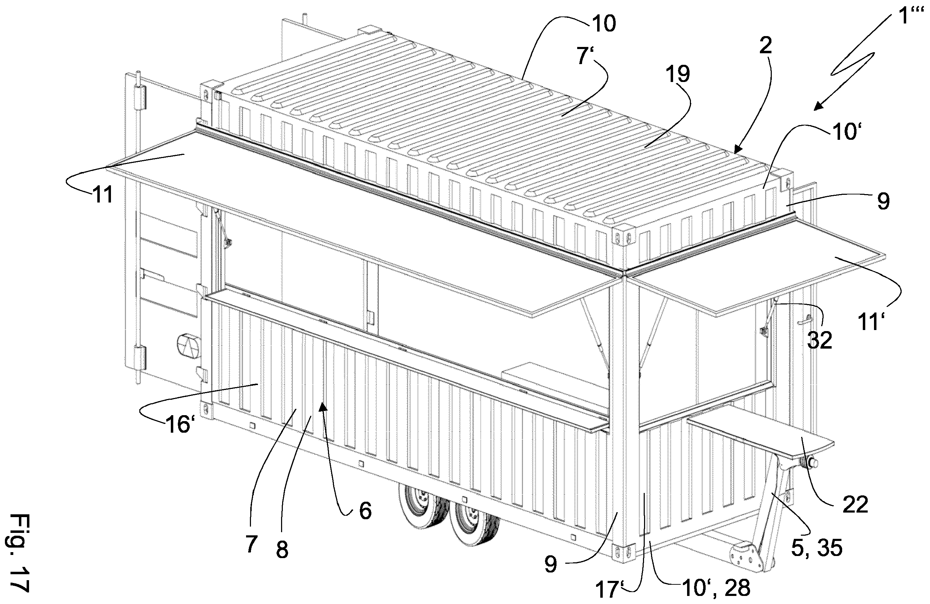

Figur 17 zeigt eine vierte Ausführungsform 1‴ des erfindungsgemäßen Verkaufsanhängers. Die Profilierung der Decke 19 unterscheidet sich hierbei von der Profilierung der Seitenwände 16, 16' und der Stirnwand 17'. Die Decke weist bei dieser Ausführungsform ausschließlich Hochsicken 7' auf, die sich in Querrichtung oberhalb einer ebenen Deckenfläche erstrecken. Die Hochsicken 7' der Decke 19 erstrecken sich dabei von einem Ende nahe des vorderseitigen längsseitigen Kantenprofils 10 bis zu einem anderen Ende nahe des rückseitigen längsseitigen Kantenprofils 10. Die Enden der Hochsicken sind abgerundet, sodass die Hochsicken in diesem Bereich die Form eines abgeflachten halbseitigen Kegels aufweisen.

### Bezugszeichenliste

- 1: Erste Ausführungsform eines Verkaufsanhänger
- 1': Zweite Ausführungsform eines Verkaufsanhängers
- 1": Dritte Ausführungsform eines Verkaufsanhängers
- 2: Kastenaufbau
- 3: Fahrgestell
- 4: Rad
- 5: Zugwagenkupplung
- 5': Verbindungselement
- 6: Trapezblech
- 7: Hochsicke
- 8: Tiefsicke
- 9: Vertikales Kantenprofil
- 10: Horizontales Kantenprofil (in Längsrichtung)
- 10': Horizontales Kantenprofil (in Querrichtung)
- 11: Klappe (Seitenwand)
- 11': Klappe (Stirnwand)
- 12: Aufnahme für Räder / Radkästen
- 13: Hydraulikeinheit
- 14: Tür
- 15, 15': Türflügel einer Flügeltür
- 16, 16': Seitenwand
- 17: Stirnwand (Flügeltür)
- 17': Stirnwand
- 18: Boden
- 19: Decke
- 20: Aufnahme für Stützstrebe
- 21: Stützrad der Zugwagenkupplung
- 22: Stehtisch(platte)
- 23: Wandöffnung
- 24: Längsrichtung
- 25: Querrichtung
- 26: vertikale Richtung
- 27: Längsträger
- 28: Querträger
- 29: Sicherheitsrolle
- 30: Hebe- und Absenkeinrichtung
- 31: Steuerung der Hebe- und Absenkeinrichtung
- 32: Hydraulikzylinder
- 33: Portalachse
- 34: Ausleger
- 35: Schwanenhalszugstange
- 36: Klappbare Theke
- 37: Verriegelungsstange
- 40, 40': Hilfslinie
- H: Profilhöhe
- B1: Breite der Hochsicke
- B2: Breite der Tiefsicke
- l₁: Gesamtlänge des Kastenaufbaus
- l₂: Länge der Öffnung
- l₃: Innenraumlänge
- l₄: Abstand des Radkastens von Stirnwand 17
- l₅: Länge des Radkastens
- l₆: Abstand des Radkastens von Stirnwand 17'
- b₁: Gesamtbreite des Kastenaufbaus
- b₂: Innenraumbreite
- b₃: Breite der Tür an Stirnwand 17'
- h₁: Gesamthöhe des Kastenaufbaus
- h₂: Abstand zwischen Unterkante des Kastenaufbaus und Unterkante der Öffnung
- h₃: Höhe der Öffnung
- h₄: Höhe der Unterkante der Öffnung (erhöhte Position)
- h₅: Höhe des Radkastens
- h₆: Höhe des Stehtischs (erhöhte Position)
- h_{6'}: Höhe des Stehtischs (abgesenkte Position)
- h₇: Abstand der Unterkante der Öffnung zur Standfläche (Boden)
- h₈: Abstand zwischen Oberkante der Öffnung und der Unterkante des Kastenaufbaus
- h₉: Innenraumhöhe
- d₁: Dicke der Klappe

## Patentansprüche

1. Verkaufsanhänger mit einem Fahrgestell (3), welches mindestens zwei Räder (4) aufweist, und mit einem quaderförmigen Kastenaufbau (2),
wobei das Fahrgestell (3) und der Kastenaufbau (2) nicht lösbar miteinander verbunden sind,
**dadurch gekennzeichnet, dass**
die zwölf Kanten des quaderförmigen Kastenaufbaus (2) durch vier vertikale (9), vier in Längsrichtung verlaufende (10) und vier in Querrichtung verlaufende Kantenprofile (10') gebildet sind, welche zusammen eine quaderförmige Skelettkonstruktion des Kastenaufbaus (2) bilden,
wobei jeweils vier der Kantenprofile (9, 10, 10') je eine von zwei Seitenwänden (16, 16'), je eine von zwei Stirnwänden (17, 17'), den Boden (18) sowie die hierzu gegenüberliegend angeordnete Decke (19) des Kastenaufbaus umrahmen,
wobei der Boden Ausnehmungen aufweist, in welche die Räder des Fahrgestells teilweise hineinragen,
und wobei zumindest beide Seitenwände (16, 16') und eine Stirnwand (17) mit Ausnahme von Wandöffnungen (23) durch geradlinig verlaufende, im Querschnitt trapezförmige Hochsicken (7) (Obergurte) und Tiefsicken (8) (Untergurte) profiliert sind.

2. Verkaufsanhänger gemäß Anspruch 1, **dadurch gekennzeichnet, dass** die Hochsicken (7) und Tiefsicken (8) der Seitenwände und die Hochsicken (7) und Tiefsicken (8) der zumindest einen Stirnwand sich vertikal erstrecken.

3. Verkaufsanhänger gemäß einem der voranstehenden Ansprüche, **dadurch gekennzeichnet, dass** die Seitenwände (16, 16') und die mindestens eine Stirnwand (17, 17') aus profilierten Blechen bestehen, welche an die sie umrahmenden Kantenprofile stumpf angeschweißt sind, wobei die durch die Außenflächen der Hochsicken definierte Ebene gegenüber der durch die hierzu parallelen Außenflächen der Kantenprofile definierten Ebene um 3 bis 15 mm zurückversetzt ist.

4. Verkaufsanhänger gemäß einem der voranstehenden Ansprüche, **dadurch gekennzeichnet, dass** die Decke (19) nur Hochsicken (7, 7') oder nur Tiefsicken (8) aufweist, die sich in Querrichtung der Decke erstrecken und jeweils in einem Abstand von höchstens 200 mm zu den oberen Längskantenprofilen (10) enden, und/oder dass die Hochsicken (7) und die Tiefsicken (8) jeweils ein gleichschenkliges Trapezprofil aufweisen, wobei die Profilmaße der Hochsicken (7) sowie der Tiefsicken (8) vorzugsweise jeweils identisch sind.

5. Verkaufsanhänger gemäß einem der voranstehenden Ansprüche, **dadurch gekennzeichnet, dass** der zwischen der Oberseite und den Schenkeln des Trapezprofils eingeschlossene Winkel im Bereich von 100 bis 150 Grad liegt und/oder dass die Breiten der Hochsicken (7) und die Breiten der Tiefsicken (8) zwischen 8 cm und 16 cm, vorzugsweise zwischen 9 cm und 14 cm und besonders bevorzugt zwischen 10 cm und 12 cm betragen.

6. Verkaufsanhänger gemäß einem der voranstehenden Ansprüche , **dadurch gekennzeichnet, dass** die profilierten Flächen eine Profiltiefe von 2 cm bis 6 cm, vorzugsweise von 3 cm bis 4 cm aufweisen und/oder dass zumindest eine Seitenwand (16) eine im Wesentlichen rechteckige Öffnung (23) aufweist, die durch zumindest eine um eine horizontale Schwenkachse verschwenkbare Klappe (11) verschließbar ist.

7. Verkaufsanhänger gemäß einem der voranstehenden Ansprüche, **dadurch gekennzeichnet, dass** sich die Öffnung (23) und die Klappe (11) über mindestens 80% der Länge einer Seitenwand erstreckt und/oder dass sich die Klappe (11) von der stirnseitigen Fläche eines ersten vertikalen Kantenprofils (9) der Skelettkonstruktion bis zur stirnseitigen Fläche eines zweiten vertikalen Kantenprofils (9) der Skelettkonstruktion erstreckt, wobei das erste und das zweite vertikale Kantenprofil (9) die Seitenwand vertikal einrahmen, wobei die Klappe (11) an beiden gegenüberliegenden Stirnseiten in etwa bündig mit den vertikalen Profilen (9) abschließt.

8. Verkaufsanhänger gemäß einem der voranstehenden Ansprüche, **dadurch gekennzeichnet, dass** das Fahrgestell (3) einen rechteckigen Rahmen mit dazwischen liegenden Längs- und Querträgern (27, 28) bildet, dessen Außenmaße den Maßen des Bodens (18) des Kastenaufbaus entsprechen.

9. Verkaufsanhänger gemäß einem der voranstehenden Ansprüche, **dadurch gekennzeichnet, dass** im Abstand von weniger als 1 m zu den hinteren Enden zweier paralleler Längsträger Sicherheitsrollen (29) vorgesehen sind, deren Umfang gegenüber der Ebene der Unterseite der Längs-und Querträger nach unten hervorsteht, um im Falle des Durchfahrens von Bodenwellen und bei starken Schwankungen des Anhängers ein direktes Aufsetzen des Rahmens auf dem Boden zu verhindern.

10. Verkaufsanhänger gemäß einem der voranstehenden Ansprüche, **dadurch gekennzeichnet, dass** der Verkaufsanhänger mindestens eine Portalachse aufweist, wobei die Portalachse mit dem Kastenaufbau verbunden sowie mit sich quer von der Portalachse (33) erstreckenden Auslegern (34) an ihren Enden versehen ist, die an ihren von der Portalachse (33) abgelegenen Enden mit den Radachsen - bzw. den Naben der Räder (4) verbunden sind.

11. Verkaufsanhänger gemäß einem der voranstehenden Ansprüche, **dadurch gekennzeichnet, dass** eine hydraulische Hubeinrichtung vorgesehen ist, welche die Winkelstellung der Ausleger bezüglich der Portalachse verändert, so dass die Radnaben bzw -achsen um die Portalachse verschwenkt werden, können, um so die Räder relativ zum Kastenaufbau abzusenken oder anzuheben, was dementsprechend, wenn die Räder auf dem Boden stehen, ein Heben oder Absenken des Kastenaufbaus bewirkt.

12. Verkaufsanhänger gemäß einem der voranstehenden Ansprüche, **dadurch gekennzeichnet, dass** an den Auslegern (34) Hydraulikzylinder (32) angreifen, welche bei ihrer Betätigung die Winkelstellung der Ausleger (34) relativ zu der Portalachse (33) verändern.

13. Verkaufsanhänger gemäß einem der voranstehenden Ansprüche, **dadurch gekennzeichnet, dass** der Kastenaufbau in einem lichten Abstand von weniger als 1 m vom jeweils nächstgelegenen vertikalen Kantenprofil (9) und vorzugsweise von weniger als 20 cm zu einer der Seitenwände (16) bzw. (16') zumindest einen und vorzugsweise mehrere vertikale Stützfüße aufweist, die zwischen einer ausgefahrenen und einer eingefahrenen Position bewegbar sind, wobei die Stützfüße in der ausgefahrenen Position dazu vorgesehen sind, den Kastenaufbau bodenseitig gegenüber einer Standfläche des Verkaufsanhängers abzustützen und auszurichten.

14. Verkaufsanhänger gemäß einem der voranstehenden Ansprüche, **dadurch gekennzeichnet, dass** die rückwärtige Stirnwand durch eine Flügeltür gebildet ist, die einen ersten und einen zweiten Türflügel aufweist, wobei der erste Türflügel über ein erstes Scharnier mit einem linkseitigen vertikalen Kantenprofil der Skelettkonstruktion und der zweite Türflügel über ein zweites Scharnier mit einem rechtsseitigen vertikalen Kantenprofil der Skelettkonstruktion verbunden ist, wobei der erste und der zweite Türflügel von einer geschlossenen Position um mindestens 90° in eine offene Position verschwenkbar sind.

15. Verkaufsanhänger gemäß einem der voranstehenden Ansprüche, **dadurch gekennzeichnet, dass** die beiden Seitenwände (16, 16') und die zumindest eine Stirnwand (17, 17') zumindest abschnittweise als Trapezblech ausgebildet sind, wobei die Trapezbleche eine Dicke von mindestens 1 mm und weniger als 4 mm, vorzugweise weniger als 3 mm und besonders bevorzugt 2,5 mm aufweisen, wobei vorzugsweise die Trapezbleche aus Stahl, insbesondere nicht rostendem Edelstahl, oder aus Aluminium bestehen.
